(19) Europäisches Patentamt / European Patent Office / Office européen des brevets

(11) **EP 4 553 094 A1**

(12) **EUROPEAN PATENT APPLICATION**
published in accordance with Art. 153(4) EPC


(43) Date of publication:
**14.05.2025 Bulletin 2025/20**

(21) Application number: **23835232.2**

(22) Date of filing: **12.06.2023**

(51) International Patent Classification (IPC):
***C08F 216/14*** (2006.01) ***C08F 214/24*** (2006.01)
***C08K 5/5435*** (2006.01) ***C08L 27/12*** (2006.01)
***C08L 29/10*** (2006.01) ***C09D 5/03*** (2006.01)
***C09D 127/12*** (2006.01)

(52) Cooperative Patent Classification (CPC):
**C08F 214/24; C08F 216/14; C08K 5/5435; C08L 27/12; C08L 29/10; C09D 5/03; C09D 127/12**

(86) International application number:
**PCT/JP2023/021768**

(87) International publication number:
**WO 2024/009696 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.07.2022 JP 2022108420**



(71) Applicant: **AGC INC.**
**Chiyoda-ku,**
**Tokyo 1008405 (JP)**

(72) Inventors:
- **HARA, Yuji**
  **Tokyo 100-8405 (JP)**
- **OTSUGU, Satoshi**
  **Tokyo 100-8405 (JP)**
- **MATSUMOTO, Mitsuhisa**
  **Tokyo 100-8405 (JP)**
- **SAHASHI, Yusuke**
  **Tokyo 100-8405 (JP)**
- **OCHI, Shuhei**
  **Tokyo 100-8405 (JP)**

(74) Representative: **Müller-Boré & Partner Patentanwälte PartG mbB**
**Friedenheimer Brücke 21**
**80639 München (DE)**


(54) **FLUORINE-CONTAINING COPOLYMER, COMPOSITION, POWDER COATING MATERIAL, COATED ARTICLE, AND METHOD FOR PRODUCING FLUORINE-CONTAINING COPOLYMER**


(57) To provide a fluorinated copolymer with which a powder coating material excellent in blocking resistance can be obtained, a method for producing the fluorinated copolymer, a composition, a powder coating material, and a coated article.

The fluorinated copolymer of the present invention is a fluorinated copolymer having units based on chlorotrifluoroethylene and units based on a vinyl ether, wherein the proportion of components having a molecular weight of 1100 or less, as obtained from an integral molecular weight distribution curve, is 0.6% or less, and the molecular weight distribution is 2.0 to 3.2.


EP 4 553 094 A1

## Description

### TECHNICAL FIELD

The present invention relates to a fluorinated copolymer, a composition, a powder coating material, a coated article and a method for producing the fluorinated copolymer.

### BACKGROUND ART

A coating material containing a fluorinated copolymer can form a coating film excellent in weather resistance. As a method for producing such a fluorinated copolymer, Patent Document 1 discloses a method to obtain a fluorinated copolymer using a fluoroolefin, a monomer having a crosslinkable group and a monomer having no fluorine atom and no crosslinking group, in the presence of a piperidyl group-containing compound and an organic solvent.

### PRIOR ART DOCUMENTS

### PATENT DOCUMENTS

Patent Document 1: WO2014/054545

### DISCLOSURE OF INVENTION

### TECHNICAL PROBLEM

In coating material fields, in view of environmental protection, powder coating materials containing no volatile organic compound (VOC) attract attention.

The present inventors have evaluated a powder coating material containing a fluorinated copolymer obtained by a method as described in Patent Document 1 and as a result found that blocking resistance of the powder coating material can still be improved.

An object of the present invention is to provide a fluorinated copolymer with which a powder coating material excellent in blocking resistance can be obtained. Another object of the present invention is to provide a method for producing the fluorinated copolymer, a composition and a powder coating material, containing the fluorinated copolymer, and a coated article obtained by using the powder coating material.

### SOLUTION TO PROBLEM

The present inventors have conducted extensive studies on the above objects and as a result, found that a powder coating material excellent in blocking resistance can be obtained by using a fluorinated copolymer having units based on chlorotrifluoroethylene and units based on a vinyl ether, with a proportion of components having a molecular weight of 1100 or less being 0.6% or less and with a molecular weight distribution being 2.0 to 3.2, and accomplished the present invention.

That is, the present inventors have found that the above objects can be achieved by the following construction.

[1] A fluorinated copolymer having units based on chlorotrifluoroethylene and units based on a vinyl ether,

wherein a proportion of components having a molecular weight of 1100 or less, as obtained from an integral molecular weight distribution curve, is 0.6% or less, and
a molecular weight distribution is 2.0 to 3.2.

[2] The fluorinated copolymer according to [1], wherein a proportion of components having a molecular weight of 2000 or less, as obtained from an integral molecular weight distribution curve, is 2.80% or less.
[3] The fluorinated copolymer according to [1] or [2], which has a weight average molecular weight of 10000 to 60000.
[4] The fluorinated copolymer according to any one of [1] to [3], which has a crosslinkable group.
[5] The fluorinated copolymer according to [4], wherein the crosslinkable group is a hydroxy group or a carboxy group.
[6] The fluorinated copolymer according to any one of [1] to [5], wherein a content of units based on chlorotrifluoroethylene is 30 to 70 mol% based on all repeating units of the fluorinated copolymer.
[7] The fluorinated copolymer according to any one of [1] to [6],

wherein the units based on a vinyl ether include units having a crosslinkable group, and
a content of the units having a crosslinkable group is 1 to 20 mol% based on all repeating units of the fluorinated copolymer.

[8] The fluorinated copolymer according to any one of [1] to [7],

wherein the units based on a vinyl ether includes units having no crosslinkable group, and
a content of the units having no crosslinkable group is 1 to 70 mol% based on all repeating units of the fluorinated copolymer.

[9] A composition comprising the fluorinated copolymer as defined in any one of [1] to [8], and a piperidyl group-containing compound.
[10] A composition comprising the fluorinated copolymer as defined in any one of [1] to [8], and a solvent.
[11] A powder coating material comprising the fluorinated copolymer as defined in any one of [1] to [8].
[12] A method for producing a coated article, which comprises applying the powder coating material as defined in [11] to a surface of a substrate to form a coating layer, and melt-curing the coating layer to form a coating film.
[13] A method for producing a fluorinated copolymer having units based on chlorotrifluoroethylene and units based on a vinyl ether,

comprising a step of conducting polymerization in a reactor in which the chlorotrifluoroethylene, the vinyl ether, a solvent and a radical polymerization initiator are present, to produce the fluorinated copolymer,
wherein after start of the polymerization, a mixture of the chlorotrifluoroethylene and the vinyl ether is supplied to the reactor continuously or intermittently,
in the reactor before the start of the polymerization, a ratio of a total molar amount of the chlorotrifluoroethylene and the vinyl ether, to a molar amount of the solvent, is 0.30 or higher, and
a molar ratio A of the vinyl ether to the chlorotrifluoroethylene in the reactor before the start of the polymerization, and a molar ratio B of the vinyl ether to the chlorotrifluoroethylene in the mixture, satisfy the following relation:

$$0.5 \leqq A/B \leqq 1.5$$

[14] The method for producing a fluorinated copolymer according to [13], wherein a molar ratio of a total molar amount of the chlorotrifluoroethylene and the vinyl ether in the reactor before the start of the polymerization, to a total amount of the chlorotrifluoroethylene and the vinyl ether used for production of the fluorinated copolymer, is 0.3 or higher.
[15] The method for producing a fluorinated copolymer according to [13] or [14], wherein the polymerization is conducted in the presence of a piperidyl group-containing compound.

## ADVANTAGEOUS EFFECTS OF INVENTION

According to the present invention, it is possible to provide a fluorinated copolymer with which a powder coating material excellent in blocking resistance can be obtained. Further, according to the present invention, it is also possible to provide a method for producing the fluorinated copolymer, a composition and a powder coating material, containing the fluorinated copolymer, and a coated article obtained by using the powder coating material.

## DESCRIPTION OF EMBODIMENTS

Meanings of terms in the present invention are as follows.
" to " used to show the range of numerical values is used to include the numerical values before and after it as the lower limit value and the upper limit value. In the numerical ranges described stepwise in this specification, the upper limit value or the lower limit value described in a certain numerical range may be replaced with an upper limit value or a lower limit value of another numerical range described stepwise. In the numerical ranges described in this specification, the upper limit value or the lower limit value described in a certain numerical range may be replaced with a value indicated in Examples.
In this specification, each component may be used alone or in combination of two or more of substances corresponding to the component. In a case where two or more substances are used in combination for a component, the content of the component means the total content of the substances used in combination, unless otherwise specified.
In this specification, a combination of two or more preferred embodiments corresponds to a more preferred embodiment.
Units generically mean an atomic group based on one molecule of a monomer, directly formed by polymerization

of the monomer, and an atomic group obtained by chemically converting a part of the atomic group. The content (mol%) of each units based on all units which a polymer has, is obtained by analyzing the polymer by nuclear magnetic resonance spectroscopy, or can be determined by the amounts of charge of components used for production of the polymer.

(Meth)acrylic generically means acrylic and methacrylic.

A hydrolysable silyl group means a group capable of forming a silanol group when hydrolyzed.

The acid value and the hydroxyl value are values measured in accordance with the method specified by JIS K0070-3 (1992).

The glass transition temperature (Tg) is an intermediate glass transition temperature of a polymer measured by differential scanning calorimetry (DSC).

The melt viscosity is a value of the melt viscosity of a sample at 170°C when heated from130°C to 200°C at a heating rate of 10 °C/min by a rotational rheometer.

The number average molecular weight (Mn) and the weight average molecular weight (Mw) are values measured by size exclusion chromatography (gel permeation chromatography) using polystyrene as a standard substance. The ratio of Mw to Mn represents the molecular weight distribution and is referred to as Mw/Mn.

The average particle size of particles is a 50% size value obtained by calculating a volume average from particle size distribution measured by a known particle size distribution measuring apparatus (e.g. Helos-Rodos, trade name, manufactured by Sympatec) based on laser diffraction as measurement principle.

The film thickness is a value measured by an eddy-current film thickness meter (e.g. EDY-500, tradename, manufactured by SANKO ELECTRONIC LABORATORY CO., LTD.).

The fluorinated copolymer of the present invention (hereinafter sometime referred to as the specific fluorinated copolymer) is a fluorinated copolymer having units based on chlorotrifluoroethylene and units based on a vinyl ether, wherein the proportion of components having a molecular weight of 1100 or less is 0.6% or less in an integral molecular weight distribution curve obtained by measurement of the fluorinated copolymer by gel permeation chromatography, and the molecular weight distribution is 2.0 to 3.2.

By using the specific fluorinated copolymer, a powder coating material excellent in blocking resistance can be obtained. The reason is not necessarily clearly understood, but is considered as follows.

Low molecular weight components having a molecular weight of 1100 or less cause a decrease of Tg of the fluorinated copolymer. If Tg of the fluorinated copolymer decreases, blocking is likely to occur when the fluorinated copolymer is used for a powder coating material. It is estimated that the specific fluorinated copolymer has a low content of low molecular weight components, and thus a powder coating material excellent in blocking resistance can be obtained.

The specific fluorinated copolymer has units based on chlorotrifluoroethylene ($CF_2$=CFCl) and units based on a vinyl ether.

The specific fluorinated copolymer preferably has a crosslinkable group, whereby a coating film which is obtained by using a powder coating material containing the specific fluorinated copolymer can further be improved.

The crosslinkable group may, for example, be specifically at least one group selected from the group consisting of a hydroxy group, an amino group, an epoxy group, an oxetanyl group, a hydrolysable silyl group, a sulfo group and a carboxy group, and with a view to further improving the hardness of a coating film obtainable by using the powder coating material, it is preferably a hydroxy group or a carboxy group, more preferably a hydroxy group. The sulfo group and the carboxy group may be ionized to be $-SO_3^-$ or $-COO^-$, and may be formed into a salt form to be $-SO_3^-Na^+$, $-COO^-Na^+$ or the like.

The number of the crosslinkable group may be one or more. Two or more types of crosslinkable groups may be used in combination.

The content of the units based on chlorotrifluoroethylene is, with a view to achieving more excellent weather resistance of a coating film obtainable by using the powder coating material containing the specific fluorinated copolymer, based on all repeating units of the specific fluorinated copolymer, preferably 30 to 70 mol%, more preferably 40 to 60 mol%, further preferably 45 to 55 mol%.

The vinyl ether may be a vinyl ether having a crosslinkable group or may be a vinyl ether having no crosslinkable group. Specific examples of the crosslinkable group are as defined above.

Two or more types of vinyl ethers may be used in combination, and particularly, preferred is an embodiment in which a vinyl ether having a crosslinkable group and a vinyl ether having no crosslinkable group are used in combination.

The vinyl ether may have a fluorine atom or may not have a fluorine atom, but preferably has no fluorine atom.

The vinyl ether having a crosslinkable group is, with a view to further improving the hardness of a coating film obtainable by using the powder coating material containing the specific fluorinated copolymer, preferably a vinyl ether having a hydroxy group or a vinyl ether having a carboxy group, more preferably a vinyl ether having a hydroxy group.

Specific examples of the vinyl ether having a hydroxy group include $CH_2$=CHO-$CH_2$-cyclo$C_6H_{10}$-$CH_2OH$, $CH_2$=$CHOCH_2CH_2OH$ and $CH_2$=$CHOCH_2CH_2CH_2CH_2OH$.

"-cyclo$C_6H_{10}$-" represents a cyclohexylene group, and the binding position of "-cyclo$C_6H_{10}$-" is usually 1,4-positions.

Two or more types of vinyl ethers having a hydroxy group may be used in combination.

Specific examples of the vinyl ether having a carboxy group include a monomer represented by $CH_2=CHO(CH_2)_{n12}OC(O)CH_2CH_2COOH$ (wherein n12 is an integer of 1 to 10).

Two or more types of vinyl ethers having a carboxy group may be used in combination.

Specific examples of the vinyl ether having no crosslinkable group include ethyl vinyl ether, tert-butyl vinyl ether, 2-ethylhexyl vinyl ether, cyclohexyl vinyl ether and cyclohexyl methyl vinyl ether.

Two or more types of vinyl ethers having no crosslinkable group may be used in combination.

The content of the units based on the vinyl ether is, based on all repeating units of the specific fluorinated copolymer, preferably 1 to 80 mol%, more preferably 10 to 70 mol%, further preferably 20 to 60 mol%.

In a case where the units based on the vinyl ether include units based on the vinyl ether having a crosslinkable group, the content of the units based on the vinyl ether having a crosslinkable group is, with a view to further improving the hardness of a coating film obtainable by using the powder coating material containing the specific fluorinated copolymer, based on all repeating units of the specific fluorinated copolymer, preferably 1 to 20 mol%, more preferably 3 to 20 mol%, further preferably 5 to 15 mol%.

In a case where the units based on the vinyl ether include units based on the vinyl ether having no crosslinkable group, the content of the units based on the vinyl ether having no crosslinkable group is, with a view to further improving the smoothness of a coating film obtainable by using the powder coating material containing the specific fluorinated copolymer, based on all repeating units of the specific fluorinated copolymer, preferably 1 to 70 mol%, more preferably 5 to 60 mol%, further preferably 10 to 50 mol%.

The specific fluorinated copolymer may have units other than the units based on chlorotrifluoroethylene and the units based on the vinyl ether (hereinafter sometime referred to as other units), however, it preferably has substantially no other units, with a view to achieving more excellent weather resistance of a coating film obtainable by using the powder coating material containing the specific fluorinated copolymer.

"Having substantially no other units" means that the content of other units is 0.1 mol% or less based on all repeating units of the specific fluorinated copolymer.

Specific examples of other units include units based on a fluoroolefin other than chlorotrifluoroethylene and units based on a vinyl ester.

The specific fluorinated copolymer preferably has no carboxy group, with a view to further improving the hardness of a coating film obtainable by using the powder coating material containing the specific fluorinated copolymer. In such a case, the specific fluorinated copolymer preferably has a hydroxy group.

The specific fluorinated copolymer has the units based on chlorotrifluoroethylene, the units based on the vinyl ether having a crosslinkable group and the units based on the vinyl ether having no crosslinkable group preferably in amounts of 30 to 70 mol%, 1 to 20 mol% and 1 to 70 mol%, respectively, more preferably 45 to 55 mol%, 5 to 15 mol% and 10 to 50 mol%, respectively, based on all units of the specific fluorinated copolymer.

Tg of the specific fluorinated copolymer is, with a view to further improving the blocking resistance of the present coating material and the surface smoothness of the present coating film, preferably 30 to 60°C, more preferably 35 to 60°C, further preferably 40 to 55°C.

Tg of the specific fluorinated copolymer is, with a view to further improving the surface smoothness of a coating film obtainable by baking at high temperature of about 200°C, preferably 51.5 to 55°C.

Tg of the specific fluorinated copolymer is, with a view to further improving the surface smoothness of a coating film obtainable by baking at low temperature of about 170°C, preferably 39 to 51°C.

The melt viscosity of the specific fluorinated copolymer at 170°C is, with a view to achieving more excellent smoothness of a coating film obtainable by using the powder coating material containing the specific fluorinated copolymer, preferably 10 to 450 Pa· s, more preferably 30 to 450 Pa·s, further preferably 40 to 400 Pa·s.

The melt viscosity of the specific fluorinated copolymer at 170°C is, with a view to further improving the surface smoothness of a coating film obtainable by baking at high temperature of about 200°C, preferably 200 to 400 Pa·s.

The melt viscosity of the specific fluorinated copolymer at 170°C is, with a view to further improving the surface smoothness of a coating film obtainable by baking at low temperature of about 170°C, preferably 15 to 100 Pa·s.

In a case where the specific fluorinated copolymer has a hydroxy value, the hydroxy value of the specific fluorinated copolymer is preferably more than 0 mgKOH/g and less than 150 mgKOH/g, more preferably 5 to 100 mgKOH/g, further preferably 15 to 70 mgKOH/g, particularly preferably 30 to 60 mgKOH/g.

In a case where the specific fluorinated copolymer has an acid value, the acid value of the specific fluorinated copolymer is preferably more than 0 mgKOH/g and less than 10 mgKOH/g, more preferably 2 to 8 mgKOH/g, further preferably 3 to 7 mgKOH/g.

Mw/Mn (molecular weight distribution) of the specific fluorinated copolymer is 2.0 to 3.2, and with a view to achieving more excellent effects of the present invention, preferably 2.3 to 3.2, more preferably 2.5 to 3.1.

Mw/Mn (molecular weight distribution) of the specific fluorinated copolymer is, with a view to further improving the surface smoothness of a coating film obtainable by baking at high temperature of about 200°C, preferably 3.0 to 3.2.

Mw/Mn (molecular weight distribution) of the specific fluorinated copolymer is, with a view to further improving the surface smoothness of a coating film obtainable by baking at low temperature of about 170°C, preferably 2.5 to 2.7.

As a method of adjusting Mw/Mn of the specific fluorinated copolymer, a method of using e.g. a piperidyl group-containing compound (described later) or hydrotalcite (described later) in production of the specific fluorinated copolymer, and a method of adjusting the amount of such a component used, may, for example, be mentioned.

Mw of the specific fluorinated copolymer is, with a view to achieving more excellent effects of the present invention, preferably 10000 to 60000, more preferably 15000 to 55000, further preferably 16000 to 52000.

Mw of the specific fluorinated copolymer is, with a view to further improving the surface smoothness of a coating film obtainable by baking at high temperature of about 200°C, preferably 40000 to 52000.

Mw of the specific fluorinated copolymer is, with a view to further improving the surface smoothness of a coating film obtainable by baking at low temperature of about 170°C, preferably 16000 to 41000.

Mn of the specific fluorinated copolymer is, with a view to achieving more excellent effects of the present invention, preferably 7000 to 20000, more preferably 8000 to 18000, further preferably 10000 to 17000.

The proportion of components having a molecular weight of 1100 or less in the specific fluorinated copolymer, as obtained from an integral molecular weight distribution curve (hereinafter sometime referred to as proportion M1) is 0.6% or less, and with a view to achieving more excellent effects of the present invention, preferably 0.58% or less, more preferably 0.55% or less. The lower limit of the proportion M1 is usually 0%.

The proportion of components having a molecular weight of 2000 or less in the specific fluorinated copolymer, as obtained from an integral molecular weight distribution curve (hereinafter sometime referred to as proportion M2) is, with a view to achieving more excellent effects of the present invention, preferably 3.00% or less, more preferably 2.80% or less. The lower limit of the proportion M2 is usually 0%.

When the after-described method for producing the fluorinated copolymer is employed, a specific fluorinated copolymer having the proportion M1 and the proportion M2 within the above ranges can readily be obtained.

The integral molecular weight distribution curve is obtained as follows.

First, by gel permeation chromatography, an elution curve (chromatogram) of the specific fluorinated copolymer obtainable from the elution time and the detection intensity by RI (differential reflectometer) is obtained. A base line is drawn on the obtained elution curve to specify the peak of the specific fluorinated copolymer. The base line is a straight line in parallel with the elution time axis at a position of 1/20 of the detection intensity of the peak of the specific fluorinated copolymer.

Then, using a calibration curve (analytical curve), the elution time is calculated as the molecular weight, the peak area (area) of the elution curve is obtained, and the concentration fraction at each elution time is calculated. The concentration fraction is integrated, and the logarithm of the molecular weight is plotted on the horizontal axis and the integrated value (%) of the concentration fraction is plotted on the vertical axis, whereby an integral molecular weight distribution curve of the specific fluorinated copolymer is obtained.

The proportion M1 corresponds to a value of the vertical axis (integrated value of the concentration fraction) at a point corresponding to the molecular weight of 1100 on the integral molecular weight distribution curve. Further, the proportion M2 corresponds to a value of the vertical axis (integrated value of the concentration fraction) at a point corresponding to the molecular weight of 2000 on the integral molecular weight distribution curve.

The specific fluorinated copolymer may be used as a component of a coating material. The coating material prepared from the specific fluorinated copolymer may be any of a solvent type coating material having the specific fluorinated copolymer dissolved in an organic solvent, an aqueous coating material having the specific fluorinated copolymer dispersed in water, and a powder coating material containing a powder of the specific fluorinated copolymer, and is preferably the powder coating material.

The specific fluorinated copolymer is produced preferably by the following method for producing the fluorinated copolymer, whereby a fluorinated copolymer having the proportion M1 and the value of the molecular weight distribution adjusted to be within the above ranges can readily be obtained.

The method for producing the fluorinated copolymer of the present invention (hereinafter sometime referred to as the present production method) is a method for producing a fluorinated copolymer having units based on chlorotrifluoroethylene and units based on a vinyl ether,

comprising a step of conducting polymerization in a reactor in which the chlorotrifluoroethylene, the vinyl ether, a solvent and a radical polymerization initiator are present, to produce the fluorinated copolymer,

wherein after start of the polymerization, a mixture of the chlorotrifluoroethylene and the vinyl ether is supplied to the reactor continuously or intermittently,

in the reactor before the start of the polymerization, the ratio of the total molar amount of the chlorotrifluoroethylene and the vinyl ether, to the molar amount of the solvent, is 0.30 or higher, and

the molar ratio A of the vinyl ether to the chlorotrifluoroethylene in the reactor before the start of the polymerization, and the molar ratio B of the vinyl ether to the chlorotrifluoroethylene in the mixture, satisfy the following relation:

$$0.5 \leqq A/B \leqq 1.5$$

According to the present production method, the above specific fluorinated copolymer can readily be produced.

The chlorotrifluoroethylene and the vinyl ether used in the present production method are as described for the above specific fluorinated copolymer, and their preferred embodiments are also the same.

In the present production method, a monomer other than chlorotrifluoroethylene and the vinyl ether may be used, however, with a view to achieving more excellent effects of the present invention, it is preferred to use as the monomers only chlorotrifluoroethylene and the vinyl ether.

The solvent (polymerization solvent) used in the present production method may, for example, be an organic solvent, water or a solvent mixture thereof, and is preferably an organic solvent, whereby production of the fluorinated copolymer will be easy.

The organic solvent is preferably at least one organic solvent selected from the group consisting of an aromatic hydrocarbon solvent, a ketone solvent, an ester solvent, an alcohol solvent and an ether ester solvent.

Specific examples of the aromatic hydrocarbon solvent include toluene, xylene, ethylbenzene, aromatic petroleum naphtha, tetralin and turpentine. The aromatic hydrocarbon solvent may be commercially available, and Solvesso (registered trademark) #100 (manufactured by ExxonMobil), Solvesso (registered trademark) #150 (manufactured by ExxonMobil) may, for example, be used.

Specific examples of the ketone solvent include acetone, methyl ethyl ketone, methyl amyl ketone, methyl isobutyl ketone, ethyl isobutyl ketone, diisobutyl ketone, cyclohexanone and isophorone.

Specific examples of the ester solvent include methyl acetate, ethyl acetate, n-propyl acetate, isobutyl acetate and tert-butyl acetate.

Specific examples of the alcohol solvent include ethanol, tert-butyl alcohol and isopropyl alcohol.

Specific examples of the ether ester solvent include ethyl 3-ethoxypropionate, propylene glycol monomethyl ether acetate and methoxybutyl acetate.

Two or more types of organic solvents may be used in combination.

The radical polymerization initiator may be a peroxide initiator or an azo initiator.

Specific examples of the peroxide initiator include cyclohexane peroxide, tert-butyl hydroperoxide, dibenzoyl peroxide, di-tert-butyl peroxide, 2,2-di-(tert-butylperoxy)butane, tert-butyl peroxypivalate, diisopropyl peroxydicarbonate.

Specific examples of the azo initiator include 2,2'-azobisisobutyronitrile, 2,2'-azobiscyclohexane carbonate nitrile, 2,2'-azobis(2,4-dimethylvalreronitrile) and 2,2'-azobis(2-methylbutyronitrile).

Two or more types of radical polymerization initiators may be used in combination.

In the present production method, after the polymerization of chlorotrifluoroethylene and the vinyl ether first charged into the reactor starts, a mixture of chlorotrifluoroethylene and the vinyl ether is continuously or intermittently supplied to the reactor.

This makes it easy to keep the concentrations of chlorotrifluoroethylene and the vinyl ether in the reactor constant, and the proportion of low molecular weight components (components having a molecular weight of 1100 or less) contained in the obtained fluorinated copolymer can be made low.

The type of the vinyl ether first charged to the reactor is the same as the type of the vinyl ether to be added after the start of the polymerization.

As to the start time of the polymerization, the reactor in which the chlorotrifluoroethylene, the vinyl ether, the solvent and the radical polymerization initiator are present is heated and the time when the temperature reaches the 10 hour half-life temperature of the radical polymerization initiator may be considered as the polymerization start time, or the reactor in which the chlorotrifluoroethylene, the vinyl ether and the solvent are present and no radical polymerization initiator is present, is heated to the 10 hour half-life temperature of the radical polymerization initiator, and the time when the radical polymerization initiator is added to the reactor kept at the 10 hour half-life temperature may be considered as the polymerization start time.

The mixture is added to the reactor after the polymerization start time.

In the present production method, "supplying the mixture continuously" means such a method that the mixture is added without interruption over a predetermined period, and the mixture is not added out of the predetermined period.

Further, in the present production method, "supplying the mixture intermittently" means such a method that the mixture is added dividedly and discontinuously, and a period over which the mixture is added and a period over which the mixture is not added are alternately repeated and there are two or more periods over which the mixture is added.

The polymerization temperature is preferably 50 to 90°C, more preferably 60 to 80°C. The polymerization pressure is preferably 0.3 to 0.8 MPa, more preferably 0.4 to 0.7 MPa. The polymerization time is preferably 0.5 to 30 hours, more preferably 1 to 20 hours.

In the reactor before the start of the polymerization, the ratio of the total molar amount Mm of chlorotrifluoroethylene and the vinyl ether, to the molar amount Ms of the solvent, that is Mm/Ms, is 0.30 or higher, and is preferably 0.50 or higher, more preferably 0.65 or higher, whereby the polymerization starts in a state where the concentration of the

monomers in the reactor is kept high, and thus the polymer chain will favorably extend, and the proportion of low molecular weight components (components having a molecular weight of 1100 or less) contained in the obtained fluorinated copolymer tends to be low.

The above ratio (Mm/Ms) is, in view of smoothness of the coating film, preferably 1.50 or lower, more preferably 1.45 or lower.

In the present production method, the ratio of the molar ratio A of the vinyl ether to chlorotrifluoroethylene in the reactor before the start of the polymerization, to the molar ratio B of the vinyl ether to chlorotrifluoroethylene in the mixture, that is A/B, is 0.5 to 1.5, preferably 0.7 to 1.3, more preferably 0.9 to 1.1. When the ratio (A/B) is within the above range, the proportion of low molecular weight components (components having a molecular weight of 1100 or less) contained in the obtained fluorinated copolymer tends to be low.

The molar ratio A is preferably 0.5 to 1.5, more preferably 0.7 to 1.3, further preferably 0.9 to 1.1.

The molar ratio B is preferably 0.7 to 2.0, more preferably 0.8 to 1.4, further preferably 0.9 to 1.1.

The molar ratio of the total molar amount Mm of chlorotrifluoroethylene and the vinyl ether in the reactor before the start of the polymerization, to the total amount Ma of chlorotrifluoroethylene and the vinyl ether used for production of the specific fluorinated copolymer, that is Mm/Ma, is preferably 0.3 or higher, more preferably 0.5 or higher, further preferably 0.7 or higher. When the molar ratio (Mm/Ma) is 0.3 or higher, more excellent blocking resistance will be achieved.

The molar ratio (Mm/Ma) is preferably 1.0 or lower, more preferably 0.8 or lower, further preferably 0.6 or lower. When the molar ratio (Mm/Ma) is 1.0 or lower, more excellent smoothness of the coating film will be achieved.

The total amount of chlorotrifluoroethylene used for the polymerization is, to the total molar amount of all monomers (the total molar amount of all the monomers used for the polymerization), preferably 30 to 70 mol%, more preferably 45 to 55 mol%.

The total amount of the vinyl ether used for the polymerization is, to the total molar amount of all monomers, preferably 1 to 80 mol%, more preferably 20 to 60 mol%.

In a case where the above vinyl ether having a crosslinkable group is used as the vinyl ether, the total amount of the vinyl ether having a crosslinkable group used for the polymerization is, to the total molar amount of all monomers, preferably 1 to 20 mol%, more preferably 5 to 15 mol%.

In a case where the vinyl ether having no crosslinkable group is used as the vinyl ether, the total amount of the vinyl ether having no crosslinkable group used for the polymerization is, to the total molar amount of all monomers, preferably 1 to 70 mol%, more preferably 10 to 50 mol%.

The radical polymerization initiator may be charged to the reactor before the start of the polymerization, or may be supplied to the reactor continuously or intermittently after the start of the polymerization of the first charged chlorotrifluoroethylene and vinyl ether.

The total amount of the radical polymerization initiator used for the polymerization is, to the total molar amount of all monomers, preferably 0.05 to 1.5 mol%, more preferably 0.1 to 1.0 mol%.

In the present production method, since a solvent is used for the polymerization, a liquid mixture containing the fluorinated copolymer and the solvent may sometimes be obtained. In such a case, the present production method may further have a step of removing the solvent from the liquid mixture.

As specific examples of a method of removing the solvent from the liquid mixture, heating and distillation may be mentioned.

In the present production method, the polymerization of chlorotrifluoroethylene and the vinyl ether is carried out preferably in the presence of at least one of a piperidyl group-containing compound and hydrotalcite, more preferably in the presence of both the piperidyl group-containing compound and hydrotalcite, whereby the polymerization will favorably proceed, and the molecular weight distribution of the obtainable fluorinated copolymer can be made smaller.

The piperidyl group-containing compound means a compound having a piperidyl group or a piperidyl group with a substituent, and is preferably a compound having a piperidyl group with a substituent.

The piperidyl group with a substituent is preferably a tetrasubstituted piperidyl group, more preferably a 2,2,6,6-tetrasubstituteed piperidyl group.

The piperidyl group-containing compound is preferably a piperidyl group-containing compound having two or more piperidyl groups or piperidyl groups with a substituent.

The piperidyl group-containing compound is used preferably in combination of two or more.

The piperidyl group-containing compound is preferably a compound represented by the following formula (a compound having a 2,2,6,6-tetrasubstituted piperidyl group).

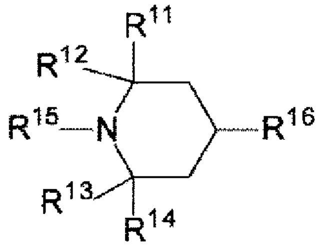

$R^{11}$ to $R^{14}$ are each independently a $C_{1-18}$ alkyl group (such as methyl group, ethyl group, propyl group, dodecyl group or stearyl group), a cycloalkyl group (such as cyclopentyl group or cyclohexyl group), a substituted alkyl group (such as 2-hydroxyethyl group, 2-methoxycarbonylethyl group or 3-hydroxypropyl group), an aryl group (such as phenyl group or naphthyl group) or an aralkyl group (such as phenethyl group or benzyl group), and $R^{11}$ and $R^{12}$, or $R^{13}$ and $R^{14}$, may form a $C_{3-6}$ aliphatic ring. $R^{11}$ to $R^{14}$ are, in view of cost and availability, preferably a $C_{1-18}$ alkyl group, particularly preferably a methyl group.

$R^{15}$ is a hydrogen atom, an alkyl group (such as methyl group, ethyl group, propyl group, butyl group, dodecyl group or stearyl group), a substituted alkyl group (such as 2-hydroxyethyl group, 2-methoxycarbonylethyl group, 2-acetoxyethyl group, 2-(3-methoxycarbonylpropionyloxy)ethyl group or 3-hydroxypropyl group), an aryl group (such as phenyl group, naphthyl group or hydroxyphenyl group), an aralkyl group (such as phenethyl group, benzyl group or hydroxyphenylalkyl group) or a cycloalkyl group (such as cyclohexyl group).

$R^{16}$ is a hydrogen atom, a hydroxy group, an alkyl group (such as methyl group, ethyl group, propyl group, butyl group, dodecyl group or stearyl group), a substituted alkyl group (such as 2-hydroxyethyl group, 2-methoxycarbonylethyl group, 2-acetoxyethyl group, 2-(3-methoxycarbonylpropionyloxy)ethyl group or 3-hydroxypropyl group), an aryl group (such as phenyl group or naphthyl group), an aralkyl group (such as phenethyl group or benzyl group), an ester bond-containing group (such as acetoxy group, propionyloxy group, butyryloxy group, lauroyloxy group, substituted alkylcarbonyloxy group, benzoyloxy group or substituted benzoyloxy group), an amino group-containing group (such as alkoxycarbonylamino group, N-monoalkylcarbamoylamino group or N,N-dialkylcarbamoylamino group) or a 2,2,6,6-tetrasubstituted piperidyl group-containing group. $R^{16}$ may be a combination of two or more of such groups.

Specific examples of the piperidyl group-containing compound include 2,2,6,6-tetramethylpiperidine, 1,2,2,6,6-pentamethylpiperidine, 4-hydroxy-2,2,6,6-tetramethylpiperidine, 4-hydroxy-1,2,2,6,6-pentamethylpiperidine, 1-ethyl-2,2,6,6-tetramethylpiperidine, 1-ethyl-4-hydroxy-2,2,6,6-tetramethylpiperidine, 1-butyl-4-hydroxy-2,2,6,6-tetramethylpiperidine, 1-dodecyl-2,2,6,6-tetramethylpiperidine, 1-phenyl-2,2,6,6-tetramethylpiperidine, 1-(2-hydroxyethyl)-2,2,6,6-tetramethylpiperidine, 1-(6-hydroxyethyl)-4-hydroxy-2,2,6,6-tetramethylpiperidine, 4-acetoxy-2,2,6,6-tetramethylpiperidine, 4-acetoxy-1,2,2,6,6-pentamethylpiperidine, 1-(2-acetoxyethyl)-4-acetoxy-2,2,6,6-tetramethylpiperidine, 1-(2-benzoyloxyethyl)-4-benzoyloxy-2,2,6,6-tetramethylpiperidine, 4-ethyl-2,2,6,6-tetramethylpiperidine, 4-ethyl-1,2,2,6,6-pentamethylpiperidine, 4-butyl-2,2,6,6-tetramethylpiperidine, 4-octyl-2,2,6,6-tetramethylpiperidine, 4-dodecyl-2,2,6,6-tetramethylpiperidine, 4-stearyl-2,2,6,6-tetramethylpiperidine, 4-stearyl-1,2,2,6,6-pentamethylpiperidine, methyl 1,2,2,6,6-pentamethyl-4-piperidyl sebacate and bis(2,2,6,6-tetramethyl-4-piperidyl) sebacate.

The piperidyl group-containing compound wherein $R^{16}$ is a 2,2,6,6-tetrasubstituted piperidyl group-containing group, may be a piperidyl group-containing compound having two or more 2,2,6,6-tetramethylpiperidyl groups in one molecule, obtained by reacting 2,2,6,6-tetramethylpiperidine having a hydroxy group (such as 4-hydroxy-2,2,6,6-tetramethylpiperidine, 4-hydroxy-1,2,2,6,6-pentamethylpiperidine, 1-(2-hydroxyethyl)-4-hydroxy-2,2,6,6-tetramethylpiperidine or 1-(2-hydroxyethyl)-2,2,6,6-tetramethylpiperidine) with a polybasic acid (such as succinic acid, adipic acid, sebacic acid, azelaic acid, decane-1,10-dicarboxylic acid, phthalic acid, isophthalic acid, terephthalic acid, trimellitic acid, malonic acid or substituted malonic acid), and specifically includes compounds of the following formulae.

In the formulae, n is an integer of 1 to 20.

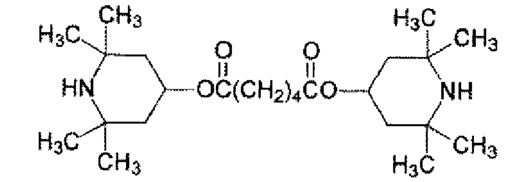

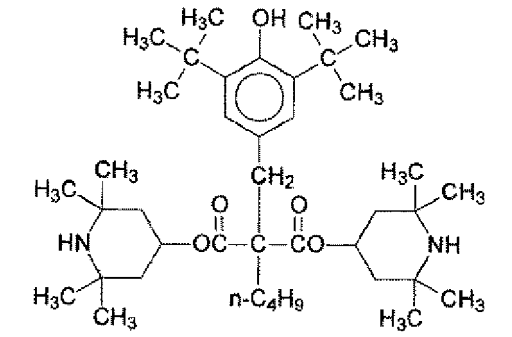

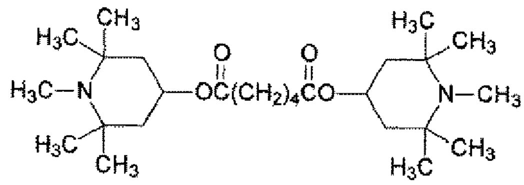

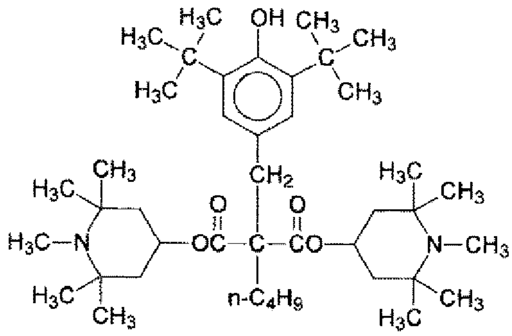

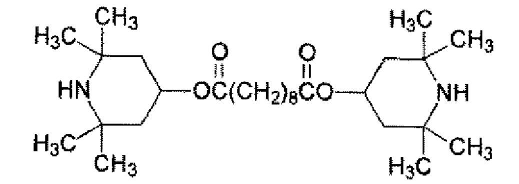

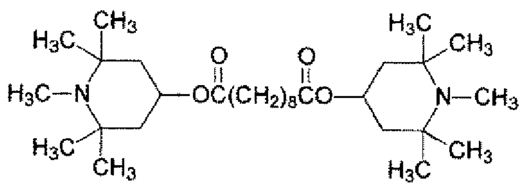

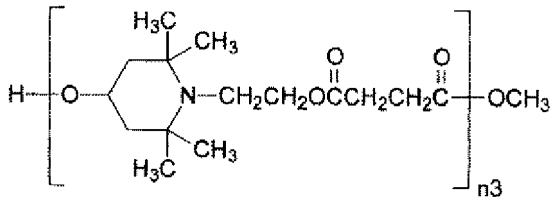

In a case where the piperidyl group-containing compound is used for the polymerization, the ratio of the molar amount of the piperidyl group in the piperidyl group-containing compound to the total molar amount of all monomers (the total molar amount of all the monomers used for the polymerization) is preferably 0.0010 to 0.0100, more preferably 0.0032 to 0.0080. When the ratio is within the above range, the molecular weight of the obtainable fluorinated copolymer can be made smaller. When the ratio is 0.0032 or higher, the obtainable fluorinated copolymer will be excellent in thermal stability. When the ratio is 0.0080 or lower, coloring of the obtainable fluorinated copolymer can be suppressed.

Hydrotalcite is a layered double hydroxide represented by the following formula:

$$[Mg^{2+}{}_{1-x}Al^{3+}{}_{x}(OH)2]^{x+}[CO3^{2-}{}_{x/2}\bullet mH_2O]^{x-}$$

wherein x is 0.2 to 0.33, and m is 0 to 2.

Hydrotalcite is, in view of excellent adsorption property of chlorine ions and availability, preferably $Mg_6Al_2(OH)_{16}CO_3\bullet 4H_2O$ (in the above formula representing hydrotalcite, x=0.25 and m=0.5), or $Mg_{4.5}Al_2(OH)_{13}CO_3\bullet 3.5H_2O$ (in the above formula representing hydrotalcite, x=0.308 and m=0.538).

Hydrotalcite may be used in combination of two or more.

The particle size of hydrotalcite is preferably 5 to 500 μm, more preferably 5 to 110 μm. When the particle size of hydrotalcite is 5 μm or larger, hydrotalcite can readily be removed by filtration. When the particle size of hydrotalcite is 500 μm or smaller, the surface area per unit mass tends to be large, and effects by hydrotalcite will further be achieved.

The particle size of hydrotalcite is measured in accordance with JIS K0069 "Test methods for sieving of chemical products".

In a case where hydrotalcite is used for the polymerization, the mass ratio of hydrotalcite used to the total mass of all monomers (the total mass of all the monomers used for the polymerization) is preferably 0.005 to 0.025, more preferably 0.010 to 0.020. When the ratio is within the above range, the molecular weight distribution of the obtainable fluorinated

copolymer can be made smaller.

In a case where the piperidyl group-containing compound and hydrotalcite are used for the polymerization, the mass ratio of hydrotalcite used to the amount of the piperidyl group-containing compound used is preferably 0.30 to 4.60, more preferably 0.50 to 1.50. When the ratio is within the above range, the molecular weight distribution of the obtainable fluorinated copolymer can be made smaller. Further, the coating film obtainable by using the fluorinated copolymer tends to be excellent in gloss.

In a case where hydrotalcite is used for the polymerization in the present production method, a liquid mixture containing the fluorinated copolymer, the solvent and insoluble components derived from hydrotalcite may sometimes be obtained. In such a case, the present production method may further have a step of removing the insoluble components from the liquid mixture.

As a specific example of a method of removing the insoluble components, solid-liquid separation such as filtration may be mentioned.

In the present production method, as the case requires, a chain transfer agent, a polymerization inhibitor, a stabilizer or the like may be used.

The composition of the present invention (hereinafter sometime referred to as the present composition) contains the specific fluorinated copolymer, and at least one of a solvent and a piperidyl group-containing compound.

The content of the specific fluorinated copolymer is, to the total mass of the present composition, preferably 5 to 99.5 mass%, more preferably 10 to 99 mass%.

The solvent may be the polymerization solvent used for the polymerization of the specific fluorinated copolymer, may be a solvent other than the polymerization solvent, or may be a mixture of the polymerization solvent and a solvent other than the polymerization solvent.

Specific examples of the solvent include the solvents mentioned for the above method for producing the fluorinated copolymer.

In a case where the present composition contains the solvent, the content of the solvent is, to the total mass of the present composition, preferably 10 to 95 mass%, more preferably 20 to 90 mass%.

The piperidyl group-containing compound is preferably the piperidyl group-containing compound mentioned for the above method for producing the fluorinated copolymer.

In a case where the present composition contains the piperidyl group-containing compound, the content of the piperidyl group-containing compound is, to the total mass of the specific fluorinated copolymer, preferably 0.3 to 2.6 mass%, more preferably 0.8 to 2.0 mass%.

The present composition may contain components other than the above.

The present composition is used preferably for production of a powder coating material described hereinafter. In a case where the present composition contains the solvent, the composition from which the solvent is removed may be used for the production of the powder coating material.

The powder coating material of the present invention (hereinafter sometime referred to as the present coating material) contains the specific fluorinated copolymer.

The content of the specific fluorinated copolymer is, to the total mass of the present coating material, preferably 30 to 100 mass%, more preferably 40 to 100 mass%.

The present coating material may contain a piperidyl group-containing compound. The piperidyl group-containing compound is preferably the piperidyl group-containing compound mentioned for the above method for producing the fluorinated copolymer.

In a case where the present coating material contains the piperidyl group-containing compound, the content of the piperidyl group-containing compound is, to the total mass of the present coating material, preferably 0.10 to 2.6 mass%, more preferably 0.15 to 2.0 mass%.

The present coating material may further contain additives.

Specific examples of the additives include a pigment, a curing agent, a catalyst (such as a curing catalyst), a polymer other than the above (such as a polyester resin, a (meth)acrylic resin or an epoxy resin), a filler (such as resin beads), a light stabilizer, an ultraviolet absorber a delustering agent, a surface modifier, a degassing agent, a flow agent, a thermal stabilizer, an antistatic agent, an anticorrosive, a silane coupling agent, an anti-staining agent, a plasticizer and an adhesive.

The present coating material may or may not contain a solvent (such as water or an organic solvent) and preferably contains no solvent. The content of the solvent is, to the total mass of the present coating material, preferably less than 1 mass%, more preferably 1 mass ppm or less, further preferably 0 mass%.

The present coating material may be produced by mixing the specific fluorinated copolymer and as the case requires additives or the like. The specific fluorinated copolymer and the additives of the like to be mixed may independently be in the form of a powder or pellets.

As an embodiment of the method for producing the present coating material, such a method may be mentioned that the specific fluorinated copolymer and the additives of the like used as the case requires, are melt-kneaded, cooled

and pulverized to obtain the powder coating material. The melt-kneading temperature is preferably 80 to 130°C.

As another embodiment of the method for producing the present coating material, such a method may be mentioned that a powder containing the specific fluorinated copolymer and a powder of the additives used as the case requires, are mixed to obtain the powder coating material. This method, called dry blending, is a method not conducting melt-kneading for mixing.

Pulverization may be conducted by a pulverizer such as a pin mill, a hammer mill or a jet mill. After pulverization, the pulverized product is classified to adjust the particle size of the obtainable powder coating material. The average particle size of the powder coating material is preferably 1 to 100 μm, more preferably 10 to 80 μm.

The coating film of the present invention (hereinafter sometime referred to as the present coating film) is formed by applying the present coating material to a substrate.

The coated article of the present invention comprises a substrate and a coating film formed of the present coating material on the substrate.

Specific examples of the material of the substrate include an inorganic substance, an organic substance and an organic/inorganic composite material.

Specific examples of the inorganic substance include concrete, natural stone, glass and a metal (such as iron, stainless steel, aluminum, copper, brass or titanium).

Specific examples of the organic substance include a plastic, a rubber, an adhesive and wood material.

Specific examples of the organic/inorganic composite material include a fiber-reinforced plastic, resin-informed concrete, and fiber reinforced concrete.

The substrate may be subjected to a known surface treatment (such as chemical conversion). The substrate may preliminarily has on its surface a resin layer (such as a polyester resin layer, an acrylic resin layer or a silicone resin layer) formed by coating with e.g. a primer.

The material of the substrate is preferably a metal, more preferably iron, an alloy containing iron (such as carbon steel or stainless steel) or aluminum.

Specific examples of the shape of the substrate include a flat plate, a sphere and a rod.

The thickness of the present coating material is preferably 20 to 1000 μm, more preferably 20 to 500 μm.

The coated article of the present invention is preferably formed by applying (coating) the present coating material to the surface of the substrate to form a coating layer, and subjecting the obtained coating layer to heat treatment, followed by cooling.

As a method of forming the coating layer, an electrostatic coating method, an electrostatic spraying method, an electrostatic dipping method, a fluidized bed coating method or a spraying method may, for example, be mentioned, and electrostatic coating using a powder coating gun is preferred.

Specific examples of the powder coating gun include a corona power coating gun and a friction powder coating gun. The corona powder coating gun is a coating gun which sprays the powder coating material subjected to corona discharge treatment. The friction powder coating gun is a coating gun which sprays the powder coating material subjected to frictional electrification treatment.

The heating temperature at the time of heat treatment is preferably 120 to 250°C. The heating maintenance time is usually 2 to 60 minutes. After the heat treatment, the coating layer is preferably cooled to 20 to 25°C. By the heat treatment and cooling, the coating layer is molten and cured (melt-cured) to form the present coating film.

## EXAMPLES

Now, the present invention will be described in further detail with reference to Examples. Ex. 1 to 7 are Examples of the present invention, and Ex. 8 to 10 are Comparative Examples. However, it should be understood that the present invention is not limited to such specific Examples. The blend amounts of the respective components in the after-described Table are based on mass unless otherwise specified.

(Ex. 1)

Into a stainless steel pressure resistant reactor having an internal capacity of 2500 ml, equipped with a stirrer, 20 g of a piperidyl group-containing compound (manufactured by BASF, trade name: "TINUVIN292", mixture of bis (1,2,2,6,6-pentamethyl-4-piperidyl) sebacate and methyl 1,2,2,6,6-pentamethyl-4-piperidyl sebacate (mass ratio 3:1)), 20 g of hydrotalcite (manufactured by Kyowa Chemical Industry Co., Ltd., trade name: "KW500", particle size 45 μm or smaller: 38%, 45 to 75 μm: 35%, 75 to 106 μm: 21%, 106 to 500 μm: 6%), 679 g of xylene, 118 g of 4-hydroxybutyl vinyl ether (hereinafter sometime referred to as HBVE), and 453 g of cyclohexyl vinyl ether (hereinafter sometime referred to as CHVE) were charged, and oxygen dissolved in the liquid was removed by deaeration with nitrogen. Further, into the reactor, 536 g of chlorotrifluoroethylene (hereinafter sometime referred to as CTFE) was introduced, followed by heating. When the temperature in the reactor reached 65°C, the pressure was 0.59 MPaG. Then, 2 ml of a 5% xylene solution of tert-butyl peroxypivalate (hereinafter sometime referred to as PBPV) was added to the reactor to initiate the reaction.

While keeping the pressure as the pressure decreased, a monomer mixture of 110 g of CTFE, 93 g of CHVE and 24 g of HBVE was continuously added to the reactor to make the reaction proceed. And, a 5% xylene solution of PBPV as the radical polymerization initiator was intermittently added to the reactor in a total amount of 55 ml to make the polymerization proceed. 16 Hours later, the reactor was cooled with water to terminate the reaction.

The reaction liquid was cooled to room temperature and purged of unreacted monomers, insoluble components in the obtained reaction liquid were removed by filtration, and an appropriate amount of xylene was added to obtain a fluorinated copolymer solution (A-1) having a solid content concentration of 65%. The fluorinated copolymer solution (A-1) contained a fluorinated copolymer, the piperidyl group-containing compound and xylene.

Then, volatile content was removed with heating under reduced pressure at 65°C by a vacuum drier for 3 hours, and then volatile content was removed with heating under reduced pressure at 130°C for 20 minutes to obtain a fluorinated copolymer composition (B-1). Nonvolatile content of the fluorinated copolymer composition (B-1) was measured and confirmed to be 99.8 mass%. The fluorinated copolymer composition (B-1) contained the fluorinated copolymer and the piperidyl group-containing compound. In the fluorinated copolymer composition (B-1), the composition of the fluorinated copolymer was CTFE/CHVE/HBVE (mol%)=50/39/11.

(Ex. 2)

Into a stainless steel pressure resistant reactor having an internal capacity of 2500 ml, equipped with a stirrer, 22 g of a piperidyl group-containing compound (manufactured by BASF, trade name: "TINUVIN292", mixture of bis (1,2,2,6,6-pentamethyl-4-piperidyl) sebacate and methyl 1,2,2,6,6-pentamethyl-4-piperidyl sebacate (mass ratio 3:1)), 22 g of hydrotalcite (manufactured by Kyowa Chemical Industry Co., Ltd., trade name: "KW500", particle size 45 μm or smaller: 38%, 45 to 75 μm: 35%, 75 to 106 μm: 21%, 106 to 500 μm: 6%), 726 g of xylene, 79 g of HBVE and 303 g of CHVE were charged, and oxygen dissolved in the liquid was removed by deaeration with nitrogen. Further, into the reactor, 357 g of CTFE was introduced, followed by heating. At a point when the temperature in the reactor reached 75°C, the pressure was 0.55 MPaG. Then, 6 ml of a 20% xylene solution of PBPV was added to the reactor to initiate the reaction.

While keeping the pressure as the pressure decreased, a monomer mixture of 350 g of CTFE, 297 g of CHVE and 78 g of HBVE was continuously added to the reactor to make the reaction proceed. And, a 20% xylene solution of PBPV as the radical polymerization initiator was intermittently added to the reactor in a total amount of 25 ml to make the polymerization proceed. 16 Hours later, the reactor was cooled with water to terminate the reaction.

The reaction liquid was cooled to room temperature and purged of unreacted monomers, insoluble components in the obtained reaction liquid were removed by filtration, and an appropriate amount of xylene was added to obtain a fluorinated copolymer solution (A-2) having a solid content concentration of 65%. The fluorinated copolymer solution (A-2) contained a fluorinated copolymer, the piperidyl group-containing compound and xylene.

Then, volatile content was removed with heating under reduced pressure at 65°C by a vacuum drier for 3 hours, and then volatile content was removed with heating under reduced pressure at 130°C for 20 minutes to obtain a fluorinated copolymer composition (B-2). Nonvolatile content of the fluorinated copolymer composition (B-2) was measured and confirmed to be 99.7 mass%. In the fluorinated copolymer composition (B-2), the composition of the fluorinated copolymer was CTFE/CHVE/HBVE (mol%)=50/39/11.

(Ex. 3 to 7)

Fluorinated copolymer compositions (B-3) to (B-7) were obtained in the same manner as in Ex. 2 except that the amounts of the respective components used and the polymerization temperature were as identified in Table 1. Each of the fluorinated copolymer compositions (B-3) to (B-7) contained a fluorinated copolymer and the piperidyl group-containing compound. In each of the fluorinated copolymer compositions (B-3) to (B-7), the composition of the fluorinated copolymer was CTFE/CHVE/HBVE (mol%)=50/39/11.

(Ex. 8)

Into a stainless steel pressure resistant reactor having an internal capacity of 2500 ml, equipped with a stirrer, 11 g of potassium carbonate, 156 g of ethanol, 625 g of xylene, 75 g of HBVE and 82 g of CHVE were charted, and oxygen dissolved in the liquid was removed by deaeration with nitrogen. Further, into the reactor, 151 g of CTFE was introduced, followed by heating. At a point when the temperature in the reactor reached 65°C, the pressure was 0.33 MPaG.

Then, 6 ml of a 50% xylene solution of PBPV was added to the reactor to initiate the reaction. While keeping the pressure as the pressure decreased, a monomer mixture of 443 g of CTFE, 240 g of CHVE and 221 g of HBVE was continuously added to the reactor to make the reaction proceed. And, a 50% xylene solution of PBPV as the radical polymerization initiator was intermittently added to the reactor in a total amount of 34 ml to make the polymerization

proceed. 16 Hours later, the reactor was cooled with water to terminate the reaction.

The reaction liquid was cooled to room temperature and purged of unreacted monomers, insoluble components in the obtained reaction liquid were removed by filtration, and an appropriate amount of xylene was added to obtain a fluorinated copolymer solution (A-8) having a solid content concentration of 65%. The fluorinated copolymer solution (A-8) contained a fluorinated copolymer, xylene and ethanol.

Then, volatile content was removed with heating under reduced pressure at 65°C by a vacuum drier for 3 hours, and then volatile content was removed with heating under reduced pressure at 130°C for 20 minutes to obtain a fluorinated copolymer composition (B-8). Nonvolatile content of the fluorinated copolymer composition was measured and confirmed to be 99.5 mass%. The fluorinated copolymer composition (B-8) contained a fluorinated copolymer. In the fluorinated copolymer composition (B-8), the composition of the fluorinated copolymer was CTFE/CHVE/HBVE (mol%)=50/25/25.

(Ex. 9 to 10)

Fluorinated copolymer compositions (B-9) to (B-10) were obtained in the same manner as in Ex. 1 except that the amounts of the respective components used were as illustrated in Table 1. Each of the fluorinated copolymer compositions (B-9) to (B-10) contained a fluorinated copolymer and the piperidyl group-containing compound. In each of the fluorinated copolymer compositions (B-9) to (B-10), the composition of the fluorinated copolymer was CTFE/CHVE/HBVE (mol%) =50/39/11.

(Measurement of molecular weight and the like of fluorinated copolymer)

The fluorinated copolymer in the fluorinated copolymer composition in each Ex. was separated and diluted with tetrahydrofuran (THF) to a concentration of the fluorinated copolymer of 1 mass% to obtain a solution. The obtained solution was subjected to filtration through a hydrophilic PTFE membrane filter having a pore size of 0.45 μm, and 1.5 ml of the solution after the filtration (measurement solution) was filled in a vial clear glass having a capacity of 2 ml.

Then, by gel permeation chromatography, an elution curve (chromatogram) of the specific fluorinated copolymer obtainable from the elution time and the detection intensity by RI (differential refractometer) was obtained.

And, using an analytical curve of polystyrene, from the retention time of the obtained elution curve, Mw, Mn and Mw/Mn of the fluorinated copolymer were obtained. The results are shown in Table 1.

Further, a base line was drawn on the obtained elution curve to specify the peak of the specific fluorinated copolymer. Then, using an analytical curve of polystyrene, the elution time was calculated as the molecular weight, the peak area (area) of the elution curve was obtained, and the concentration fraction at each elution time was calculated. The concentration fraction was integrated, and the logarithm of the molecular weight was plotted on the horizontal axis and the integrated value (%) of the concentration fraction was plotted on the vertical axis, whereby an integral molecular weight distribution curve of the specific fluorinated copolymer was obtained. From the obtained integral molecular weight distribution curve, the proportion (proportion M1) of components having a molecular weight of 1100 or less in the specific fluorinated copolymer, and the proportion (proportion M2) of components having a molecular weight of 2000 or less in the specific fluorinated copolymer were obtained. The results are shown in Table 1.

<Conditions of measurement by gel permeation chromatography>

Apparatus: HLC-8320GPC (manufactured by Tosoh Corporation)
Analytical column: two columns of Shodex GPC KF-806M (manufactured by Showa Denko K.K) and one column of Shodex GPC KF-802 (manufactured by Showa Denko K.K.) were connected.
Column oven: 40°C
Pump oven: 40°C
Eluent tetrahydrofuran
Flow rate: 1.0 ml/min
Detector: RI
Analytical curve sample: EasiCal PS-1 (polystyrene, manufactured by Agilent)
Analytical curve molecular weight range: 580 to 570000

(Tg)

Using a differential scanning calorimeter (DSC3500Sirius, manufactured by NETZSCH), Tg of the fluorinated copolymer was obtained. The results are shown in Table 1.

(Melt viscosity)

Using a rotational rheometer (HAAKE MARS40, manufactured by ThermoFisher), the fluorinated copolymer was heated from 130°C to 200°C at a heating rate of 10 °C/min at a frequency of 1 Hz, and the melt viscosity of the fluorinated copolymer at 170°C was obtained. The results are shown in Table 1.

(Blocking resistance)

The fluorinated copolymer composition in each Ex. was powdered by a pulverizer. 5 g of the powdered fluorinated copolymer composition was put in a 20 ml glass container. The glass container was warmed to 40°C by a dryer. 60 Days later, the glass container was taken out from the dryer and cooled to room temperature.

After cooling, the state of the powder of the fluorinated copolymer composition was evaluated based on the following standard. The results are shown in Table 1.

O: A powder state maintained.
△: The composition was solidified but returned to powder when shaken.
×: The composition was solidified and not returned to powder even when shaken.

(Evaluation of smoothness)

<Production of powder coating material>

The fluorinated copolymer composition in each Ex. was powdered by a pulverizer.

Using the powdered fluorinated copolymer composition in each of Ex. 1 to 7 and 9 to 10, a powder mixture was prepared as follows. To 100 parts by mass of the powdered fluorinated copolymer composition, 67 parts by mass of titanium oxide (manufactured by DuPont, Ti-Pure (registered trademark) R960), 25 parts by mass of a blocked isocyanate curing agent (manufactured by EVONIK, VESTAGON (registered trademark) B1530), 0.012 parts by mass of a xylene solution (10000 fold diluted) of dibutyltin dilaurate as a curing catalyst, 0.8 parts by mass of benzoin as a degassing agent and 2 parts by mass of a surface modifier (manufactured by BYK-Chemie, BYK (registered trademark) -360P) were added and mixed by a high speed mixer (manufactured by Yusaki Co., Ltd.) for about 10 to 30 minutes to obtain a powdery mixture.

Further, using the powdery fluorinated copolymer composition in Ex. 8, a powdery mixture was prepared as follows. To 100 parts by mass of the powdery fluorinated copolymer composition, 69 parts by mass of titanium oxide (manufactured by DuPont, Ti-Pure (registered trademark) R960), 78 parts by mass of a blocked isocyanate curding agent (manufactured by Sumika Covestro Urethane Co., Ltd., Crelan (registered trademark) UI), 0.4 parts by mass of a xylene solution (100 fold diluted) of dibutyltin dilaurate as a curing catalyst, 1.3 parts by mass of benzoin as a degassing agent, and 3 parts by mass of a surface modifier (manufactured by BYK-Chemie, BYK (registered trademark) -360P) were added and mixed by a high speed mixer (manufactured by Yusaki Co., Ltd.) for about 10 to 30 minutes to obtain a powdery mixture.

Then, using a twin screw extruder (manufactured by ThermoPrism, 16 mm extruder), the powdery mixture was melt-kneaded at a barrel set temperature of 120°C to obtain pellets. The obtained pellets were pulverized by a pulverizer (manufactured by FRITSCH, Rotor Speed Mill P14) at room temperature and classified with a 150 mesh sieve to obtain a powder coating material having an average particle size of about 40 μm.

<Production of substrate with coating film>

Using the obtained powder coating material, electrostatic coating was applied on one surface of an aluminum plate subjected to chromate treatment by an electrostatic coating machine (manufactured by Onoda Cement Co., Ltd., GX3600C) to form a coating layer of the powder coating material.

The aluminum plate with the coating layer in Ex. 1 was held in a 200°C atmosphere for 20 minutes. The aluminum plates with the coating layer in other Ex. were held in a 170°C atmosphere for 20 minutes.

After the heating, the aluminum plate with the coating layer in each Ex. was left to stand and cooled to room temperature to obtain an aluminum plate with a coating film (cured film) having a film thickness of 55 to 65 μm.

<Method of evaluation of smoothness>

Surface smoothness of the coating film of the aluminum plate with a coating film was evaluated based on the following standards, by means of PCI (Powder Coating Institute) Powder Coating Visual Smoothness Standards. The Standards are a set ot ten panels of 1 to 10, and the larger the number, the better the smoothness. The results are shown in

Table 1.

○: PCI rating 4 or higher
△: PCI rating 2 or higher and less than 4
×: PCI rating less than 2

In the following Table 1, Mm/Ma represents the ratio of the total molar amount Mm of chlorotrifluoroethylene and the vinyl ether in the reactor before the start of the polymerization, to the total amount Ma (molar amount) of chlorotrifluoroethylene and the vinyl ether used for the production of the fluorinated copolymer.
Mm/Ms represents the ratio of the total molar amount Mm of chlorotrifluoroethylene and the vinyl ether, to the molar amount Ms of the solvent in the reactor before the start of the polymerization.
A/B represents the ratio of the molar ratio A of the vinyl ether to chlorotrifluoroethylene in the reactor before the start of the polymerization to the molar ratio B of the vinyl ether to chlorotrifluoroethylene in the monomer mixture.
Further, M1 represents the proportion of components having a molecular weight of 1100 or less in the fluorinated copolymer, and M2 represents the proportion of components having a molecular weight of 2000 or less in the fluorinated copolymer.

Table 1

| | | Unit | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| First charged monomers | CTFE | g | 536 | 357 | 298 | 397 | 298 | 298 | 238 | 151 | 536 | 362 |
| | HBVE | | 118 | 79 | 66 | 87 | 66 | 66 | 53 | 75 | 38 | 64 |
| | CHVE | | 453 | 303 | 253 | 337 | 253 | 253 | 202 | 82 | 145 | 244 |
| Continuously charged monomers | CTFE | | 110 | 350 | 298 | 310 | 298 | 298 | 358 | 443 | 110 | 110 |
| | HBVE | | 24 | 78 | 66 | 68 | 66 | 66 | 79 | 221 | 19 | 12 |
| | CHVE | | 93 | 297 | 253 | 263 | 253 | 253 | 303 | 240 | 74 | 46 |
| Xylene | | | 679 | 726 | 726 | 726 | 726 | 726 | 726 | 625 | 679 | 1018 |
| Ethanol | | | - | - | - | - | - | - | - | 156 | - | - |
| Potassium carbonate | | | - | - | - | - | - | - | - | 11 | - | - |
| Piperidyl group-containing compound | | | 20 | 22 | 19 | 22 | 19 | 19 | 19 | - | 20 | 20 |
| Hydrotalcite | | | 20 | 22 | 19 | 22 | 19 | 19 | 19 | - | 20 | 20 |
| Number of moles of piperidyl groups/ number of moles of all monomer | | mol/mol | 0.0066 | 0.0067 | 0.0068 | 0.0067 | 0.0068 | 0.0067 | 0.0067 | - | 0.0081 | 0.0090 |
| Amount of potassium carbonate/amount of all monomer | | mass% | - | - | - | - | - | - | - | 0.9 | - | - |
| Mm/Ma | | mol/mol | 0.83 | 0.50 | 0.50 | 0.56 | 0.50 | 0.50 | 0.40 | 0.25 | 0.78 | 0.80 |
| Mm/Ms | | mol/mol | 1.44 | 0.90 | 0.75 | 1.00 | 0.75 | 0.75 | 0.60 | 0.28 | 0.95 | 0.58 |
| A/B | | - | 1.00 | 1.00 | 1.00 | 1.00 | 1.00 | 1.00 | 1.00 | 1.00 | 0.40 | 1.60 |
| Polymerization temperature | | °C | 65 | 75 | 75 | 75 | 75 | 65 | 75 | 65 | 65 | 65 |
| Fluorinated copolymer composition | | | B-1 | B-2 | B-3 | B-4 | B-5 | B-6 | B-7 | B-8 | B-9 | B-10 |
| Nonvolatile content | | mass% | 99.8 | 99.7 | 99.4 | 99.9 | 99.2 | 99.7 | 99.1 | 99.5 | 98.1 | 99.0 |
| Molecular weight | Mw | - | 50200 | 30600 | 26400 | 33700 | 24800 | 24400 | 19400 | 15200 | 15100 | 18000 |
| | Mn | - | 16800 | 10900 | 10000 | 12200 | 10300 | 9500 | 8800 | 7000 | 6000 | 7100 |
| | Mw/M n | - | 3.0 | 2.8 | 2.6 | 2.8 | 2.4 | 2.6 | 2.2 | 2.2 | 2.5 | 2.5 |
| M1 | | % | 0.17 | 0.54 | 0.54 | 0.37 | 0.43 | 0.56 | 0.57 | 0.70 | 1.44 | 1.09 |
| M2 | | % | 1.08 | 2.48 | 2.72 | 1.96 | 2.24 | 2.87 | 2.81 | 4.00 | 6.58 | 4.85 |
| Tg | | °C | 53 | 46 | 43 | 51 | 42 | 47 | 43 | 34 | 28 | 37 |

(continued)

| | Unit | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Melt viscosity at 170°C | Pa·s | 300 | 74 | 50 | 96 | 49 | 54 | 33 | 7 | 9 | 20 |
| Blocking resistance | - | ○ | ○ | ○ | ○ | ○ | △ | △ | × | × | × |
| Smoothness | - | ○ | ○ | ○ | ○ | ○ | ○ | ○ | ○ | ○ | ○ |

As evident from Table 1, it was confirmed that with a fluorinated copolymer having units based on CTFE and units based on a vinyl ether, with the proportion M1 being 0.6% or less and Mw/Mn being 2.0 to 3.2, a powder coating material excellent in blocking resistance can be obtained.

The entire disclosure of Japanese Patent Application No. 2022-108420 filed on July 5, 2022 including specification, claims and summary is incorporated herein by reference in its entirety.

## Claims

1. A fluorinated copolymer having units based on chlorotrifluoroethylene and units based on a vinyl ether,

   wherein a proportion of components having a molecular weight of 1100 or less, as obtained from an integral molecular weight distribution curve, is 0.6% or less, and
   a molecular weight distribution is 2.0 to 3.2.

2. The fluorinated copolymer according to Claim 1, wherein a proportion of components having a molecular weight of 2000 or less, as obtained from an integral molecular weight distribution curve, is 2.80% or less.

3. The fluorinated copolymer according to Claim 1, which has a weight average molecular weight of 10000 to 60000.

4. The fluorinated copolymer according to Claim 1, which has a crosslinkable group.

5. The fluorinated copolymer according to Claim 4, wherein the crosslinkable group is a hydroxy group or a carboxy group.

6. The fluorinated copolymer according to Claim 1, wherein a content of units based on chlorotrifluoroethylene is 30 to 70 mol% based on all repeating units of the fluorinated copolymer.

7. The fluorinated copolymer according to Claim 1,

   wherein the units based on a vinyl ether include units having a crosslinkable group, and
   a content of the units having a crosslinkable group is 1 to 20 mol% based on all repeating units of the fluorinated copolymer.

8. The fluorinated copolymer according to Claim 1,

   wherein the units based on a vinyl ether includes units having no crosslinkable group, and
   a content of the units having no crosslinkable group is 1 to 70 mol% based on all repeating units of the fluorinated copolymer.

9. A composition comprising the fluorinated copolymer as defined in any one of Claims 1 to 8, and a piperidyl group-containing compound.

10. A composition comprising the fluorinated copolymer as defined in any one of Claims 1 to 8, and a solvent.

11. A powder coating material comprising the fluorinated copolymer as defined in any one of Claims 1 to 8.

12. A method for producing a coated article, which comprises applying the powder coating material as defined in Claim 11 to a surface of a substrate to form a coating layer, and melt-curing the coating layer to form a coating film.

13. A method for producing a fluorinated copolymer having units based on chlorotrifluoroethylene and units based on a vinyl ether,

    comprising a step of conducting polymerization in a reactor in which the chlorotrifluoroethylene, the vinyl ether, a solvent and a radical polymerization initiator are present, to produce the fluorinated copolymer,
    wherein after start of the polymerization, a mixture of the chlorotrifluoroethylene and the vinyl ether is supplied to the reactor continuously or intermittently,
    in the reactor before the start of the polymerization, a ratio of a total molar amount of the chlorotrifluoroethylene

and the vinyl ether, to a molar amount of the solvent, is 0.30 or higher, and
a molar ratio A of the vinyl ether to the chlorotrifluoroethylene in the reactor before the start of the polymerization, and a molar ratio B of the vinyl ether to the chlorotrifluoroethylene in the mixture, satisfy the following relation:

$$0.5 \leqq A/B \leqq 1.5$$

**14.** The method for producing a fluorinated copolymer according to Claim 13, wherein a molar ratio of a total molar amount of the chlorotrifluoroethylene and the vinyl ether in the reactor before the start of the polymerization, to a total amount of the chlorotrifluoroethylene and the vinyl ether used for production of the fluorinated copolymer, is 0.3 or higher.

**15.** The method for producing a fluorinated copolymer according to Claim 13 or 14, wherein the polymerization is conducted in the presence of a piperidyl group-containing compound.

## INTERNATIONAL SEARCH REPORT

International application No. **PCT/JP2023/021768**

**A. CLASSIFICATION OF SUBJECT MATTER**

***C08F 216/14***(2006.01)i; ***C08F 214/24***(2006.01)i; ***C08K 5/5435***(2006.01)i; ***C08L 27/12***(2006.01)i; ***C08L 29/10***(2006.01)i; ***C09D 5/03***(2006.01)i; ***C09D 127/12***(2006.01)i

FI: C08F216/14; C09D127/12; C09D5/03; C08L29/10; C08K5/5435; C08F214/24; C08L27/12

According to International Patent Classification (IPC) or to both national classification and IPC

**B. FIELDS SEARCHED**

Minimum documentation searched (classification system followed by classification symbols)

C08F216/14; C08F214/24; C08K5/5435; C08L27/12; C08L29/10; C09D5/03; C09D127/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2014-88495 A (DIC CORP) 15 May 2014 (2014-05-15) claims 1, 7, paragraphs [0066]-[0068], [0080]-[0082], examples 1, 3, tables 1, 2 | 1-10, 13-15 |
| X | JP 2014-15533 A (DIC CORP) 30 January 2014 (2014-01-30) claim 1, paragraphs [0067]-[0069], synthesis example 2, example 2, tables 1, 2 | 1-10, 13-15 |
| A | JP 3-146510 A (ASAHI GLASS CO LTD) 21 June 1991 (1991-06-21) examples 1-3, table 1 | 1-15 |
| A | JP 7-33842 A (ASAHI GLASS CO LTD) 03 February 1995 (1995-02-03) examples 1, 2 | 1-15 |
| A | WO 2017/122701 A1 (ASAHI GLASS CO LTD) 20 July 2017 (2017-07-20) claims, examples | 1-15 |
| A | WO 2015/056751 A1 (ASAHI GLASS CO LTD) 23 April 2015 (2015-04-23) claims, examples | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 July 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/021768**

**C. DOCUMENTS CONSIDERED TO BE RELEVANT**

| Category* | Citation of document, with indication, where appropriate, of the relevant passages | Relevant to claim No. |
|---|---|---|
| A | JP 5-163457 A (DAINIPPON INK & CHEM INC) 29 June 1993 (1993-06-29) claims, examples | 1-15 |

Form PCT/ISA/210 (second sheet) (January 2015)

**INTERNATIONAL SEARCH REPORT**
**Information on patent family members**

International application No.
**PCT/JP2023/021768**

| Patent document cited in search report | Publication date (day/month/year) | Patent family member(s) | Publication date (day/month/year) |
|---|---|---|---|
| JP 2014-88495 A | 15 May 2014 | (Family: none) | |
| JP 2014-15533 A | 30 January 2014 | (Family: none) | |
| JP 3-146510 A | 21 June 1991 | US 5304617 A<br>examples 1-3, table 1<br>WO 1991/006584 A1<br>EP 451296 A1<br>KR 10-1992-0701277 A | |
| JP 7-33842 A | 03 February 1995 | (Family: none) | |
| WO 2017/122701 A1 | 20 July 2017 | CN 108699312 A<br>TW 201736532 A | |
| WO 2015/056751 A1 | 23 April 2015 | CN 105637030 A<br>TW 201527386 A | |
| JP 5-163457 A | 29 June 1993 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014054545 A
- JP 2022108420 A